# EUROPEAN PATENT APPLICATION

(11) **EP 3 367 641 A1**
(43) Date of publication of application: **29.08.2018**
(21) Application number: 16822103.4
(22) Date of filing: 06.07.2016
(51) Int. Cl.: H04M 1/02, G06F 3/0481

(54) **HANDHELD TERMINAL**

(30) Priority: 19.10.2015 CN 201510680612
(71) Applicant: BOE Technology Group Co., Ltd., Beijing 100015 (CN)
(72) Inventor: HE, Jianmin, Beijing 100176 (CN); LENG, Changlin, Beijing 100176 (CN); HUANG, Zicheng, Beijing 100176 (CN); LI, Hui, Beijing 100176 (CN)
(74) Representative: Jacobacci Coralis Harle
(86) International application number: PCT/CN2016/088812
(87) International publication number: WO 2017/067231

(57) **Abstract**

A handheld terminal with a transparent display unit is provided. The handheld terminal comprises: a first transparent display unit disposed on one of a front side and a back side of the handheld terminal; a second transparent display unit disposed on the other side, or a first and a second gesture detection units disposed on the two sides respectively; a drive module comprising a first display drive module for the first transparent display unit, and one of the following two constituent parts: a second display drive module for the second transparent display unit, or a first and a second gesture detection drive modules for the first and second gesture detection units respectively; and a processing module configured to cause an image to be displayed on the first transparent display unit, and to perform one of the two operations of: causing the image or another image different from the image to be displayed on the second transparent display unit; or processing a gesture input detected via at least one of the first and second gesture detection units.

## Description

The present application claims the priority of Chinese patent application No. 201510680612.4, filed on October 19, 2015, the disclosure of which is hereby entirely incorporated by reference.

### TECHNICAL FIELD

Embodiments of the present invention relate to handheld terminal.

### BACKGROUND

With the development of electronic technology and wireless communication technology, mobile phone has evolved, from a single-function terminal with only capabilities for phone calls and short messages, to a multi-function terminal with further capabilities for Internet surfing, office work and entertainment. At present, mobile phone users can download various apps from an app store and install them. These apps cover various aspects of life, thereby greatly enriching the functions of a mobile phone. In addition to mobile phones, various other handheld terminals, such as tablet PCs, personal digital assistants and so on, are also playing an increasingly important role in people's lives. Therefore, there is a demand to constantly enrich the functions of a handheld terminal.

### SUMMARY

One of the objects of the present invention is to provide a handheld terminal having a novel construction, thereby enriching the functions of the handheld terminal.

According to a first aspect of the present invention, there is provided a handheld terminal which enables a user to see the opposite side through a portion of the handheld terminal. The handheld terminal comprises: a first transparent display unit disposed on one of a front side and a back side of the handheld terminal; a second transparent display unit disposed on the other of the front side and the back side, or a first and a second gesture detection units disposed on the front side and the back side respectively; a drive module comprising a first display drive module for the first transparent display unit, and one of the following two constituent parts: a second display drive module for the second transparent display unit; or a first and a second gesture detection drive modules for the first and second gesture detection units respectively; and a processing module configured to cause an image to be displayed on the first transparent display unit, and to perform one of the two operations of: causing the image or another image different from the image to be displayed on the second transparent display unit; or processing a gesture input detected via at least one of the first and second gesture detection units.

According to the above configuration, the handheld terminal can have a double-side display function or a double-side manipulation function, thereby improving the usability of the handheld terminal.

Optionally, according to a second aspect of the present invention, the handheld terminal comprises the second transparent display unit and the first and second gesture detection units, the drive module further comprises the other of the two constituent parts, and the processing module is further configured to perform the other of the two operations.

According to the above configuration, the handheld terminal can have both the double-side display function and the double-side manipulation function, thereby improving the usability of the handheld terminal.

Optionally, according to a third aspect of the present invention, the first and second transparent display units comprise a first and a second OLED light emitting layers respectively. The first and second transparent display units share one substrate, or comprise a first and a second substrates respectively, wherein the first and second substrates are combined together.

Optionally, according to a fourth aspect of the present invention, the first and second transparent display units each comprise an OLED display panel, an LCD display panel, or a projection type display panel.

Optionally, according to a fifth aspect of the present invention, the first and second gesture detection units each comprise a capacitive touch panel, a resistive touch panel, an infrared touch panel, or a somatosensory unit.

Optionally, according to a sixth aspect of the present invention, the processing module is further configured to cause an image to be displayed on a corresponding transparent display unit according to one of a front display mode, a back display mode, and a double-side display mode.

According to the above configuration, the handheld terminal can flexibly display an image on any one of the two transparent display unit, thereby improving the usability of the handheld terminal.

Optionally, according to a seventh aspect of the present invention, the processing module is further configured to, according to a gesture input detected via at least one of the first and second gesture detection units, cause an appearance of an object in a to-be-displayed image to change correspondingly.

According to the above configuration, the handheld terminal enables a user to manipulate the object in the display image with different fingers on the front side and the back side of the handheld terminal simultaneously, to change the appearance of the object, thereby enhancing the interactivity between the handheld terminal and the user and expanding the use of the handheld terminal in for example entertainment games.

Optionally, according to an eighth aspect of the present invention, the handheld terminal further comprises a sensor module for sensing information related to a rotation of the handheld terminal relative to a horizontal direction. The processing module is further configured to: rotate a to-be-displayed image according to the information such that the rotated image does not rotate relative to the horizontal direction; or cause a motion state of an object in a to-be-displayed image to change correspondingly according to the information.

According to the above configuration, the handheld terminal can exhibit the same image display effect no matter how the handheld terminal rotates, or the user can interact with the object in the image displayed on the handheld terminal by rotating the handheld terminal, thereby improving the usability of the handheld terminal.

Optionally, according to a ninth aspect of the invention, the sensor module comprises an acceleration sensor, or comprises an acceleration sensor and a gyroscope.

Optionally, according to a tenth aspect of the present invention, the handheld terminal further comprises a camera module for viewing and photographing an object, and a communication module for performing wireless communication. The camera module is configured to, under a control of the processing module, take an image of a front object when the handheld terminal is facing the object. The communication module is configured to, under a control of the processing module, transmit data which is related to the image of the object taken by the camera module, to a server having an augmented reality function, and to receive related information of the object from the server. The processing module is configured to cause the related information to be displayed on a corresponding transparent display unit.

According to the above configuration, the handheld terminal enables a user to see the opposite side through a portion of the handheld terminal. The portion can be directly used as a view finder to observe the front object, and the related information of the object can be directly superimposed on the corresponding transparent display unit, such that the handheld terminal has a novel augmented reality (AR) function.

Optionally, according to an eleventh aspect of the present invention, the processing module comprises: a graphics processor for generating the image; and an image processing module configured to cause the image to be displayed on the corresponding transparent display unit, according to one of the front display mode, the back display mode, and the double-side display mode.

Optionally, according to a twelfth aspect of the present invention, the processing module comprises: a graphics processor for generating the image; and an image processing module configured to, according to the gesture input detected via at least one of the first and second gesture detection units, cause the appearance of the object in the to-be-displayed image to change correspondingly.

Optionally, according to a thirteenth aspect of the present invention, the processing module comprises: a graphics processor for generating the image; and an image processing module configured to: rotate the to-be-displayed image according to the information such that the rotated image does not rotate relative to the horizontal direction; or cause the motion state of the object in the to-be-displayed image to change correspondingly according to the information.

Optionally, according to a fourteenth aspect of the present invention, the processing module comprises a central processor configured to control the camera module and the communication module, and to cause the related information to be displayed on the corresponding transparent display unit.

### BRIEF DESCRIPTION OF THE DRAWINGS

In order to more clearly illustrate the technical solution of embodiments of the present invention, the drawings are simply introduced below. Apparently, the schematic structure diagrams in the following drawings are not necessarily drawn to scale, but exhibit various features in a simplified form. Moreover, the drawings in the following description relate merely to some embodiments of the present invention, and are not intended to limit the present invention.
Fig. 1 is a schematic structure diagram showing an example of a transparent portion of a handheld terminal according to Embodiment 1 of the present invention;
Fig. 2 is a system block diagram showing an example of a handheld terminal according to Embodiment 1 of the present invention;
Fig. 3 is a schematic structure diagram showing an example of a transparent portion of a handheld terminal according to Embodiment 2 of the present invention;
Fig. 4 is a schematic structure diagram showing an example of a transparent portion of a handheld terminal according to Embodiment 3 of the present invention;
Fig. 5 is a schematic structure diagram showing an example of a transparent portion of a handheld terminal according to Embodiment 4 of the present invention; and
Fig. 6 is a diagram showing a practical application scenario of a handheld terminal according to an embodiment of the present invention.

### DETAILED DESCRIPTION

In order to make the objectives, technical solutions and advantages of embodiments of the present invention apparent, the technical solutions of embodiments of the present invention will be described clearly and completely hereinafter in conjunction with the drawings. Apparently, embodiments described herein are merely a part of but not all embodiments of the present invention. Based on embodiments of the present invention described herein, those skilled in the art can obtain other embodiments without any creative work, which should be within the scope of the present invention.

A handheld terminal of the present invention enables a user to see the opposite side through a portion of the handheld terminal, and comprises: a first transparent display unit disposed on one of a front side and a back side of the handheld terminal; a second transparent display unit disposed on the other of the front side and the back side, or a first and a second gesture detection units disposed on the front side and the back side respectively; a drive module comprising a first display drive module for the first transparent display unit, and one of the following two constituent parts: a second display drive module for the second transparent display unit; or a first and a second gesture detection drive modules for the first and second gesture detection units respectively; and a processing module configured to cause an image to be displayed on the first transparent display unit, and to perform one of the two operations of: causing the image or another image different from the image to be displayed on the second transparent display unit; or processing a gesture input detected via at least one of the first and second gesture detection units.

In the specification of the present application, the handheld terminal comprises, but not limited to, a mobile phone, a tablet PC, a personal digital assistant (PDA), and the like. Moreover, for a handheld terminal having a physical keyboard, the front side of the handheld terminal may be a side provided with the physical keyboard. For a handheld terminal having no physical keyboard, the front side of the handheld terminal may be a side provided with a home key. However, the present invention is not limited thereto. The front side and the back side of a handheld terminal may also be arbitrarily set. Hereinafter, the handheld terminal of the present invention will be specifically described with reference to four embodiments.

### Embodiment 1

### 1. Structure of transparent portion

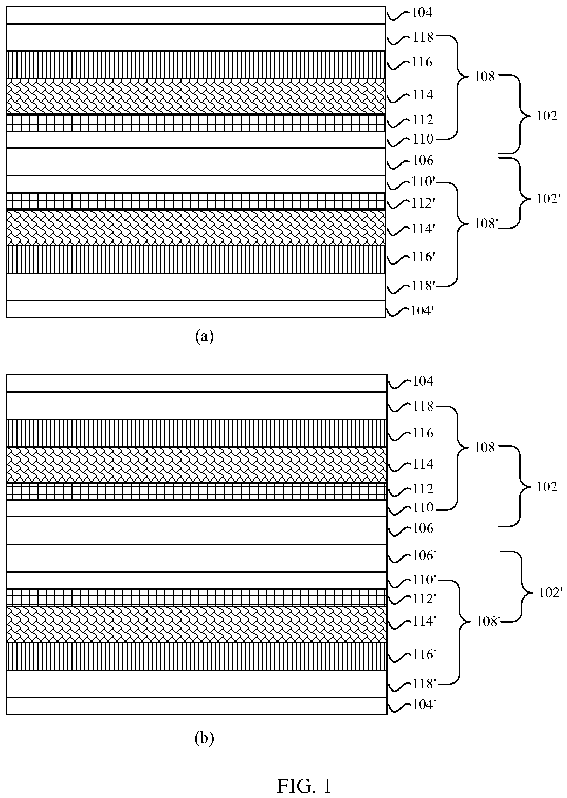

Fig. 1 is a schematic structure diagram showing an example of a transparent portion of a handheld terminal according to Embodiment 1 of the present invention. In Fig. 1, the upward direction represents the forward direction (i.e., the front side of the handheld terminal), and the downward direction represents the backward direction (i.e., the back side of the handheld terminal). As shown in Fig. 1(a), the transparent portion comprises a forward transparent display unit 102, a backward transparent display unit 102', a forward gesture detection unit 104, and a backward gesture detection unit 104'. In this example, the forward and backward transparent display units 102, 102' both are transparent OLED display panels, and the forward and backward gesture detection units 104, 104' both are touch panels. The forward and backward transparent OLED display panels may be implemented by using any existing techniques for manufacturing transparent OLED display panels. The forward and backward touch panels may each comprise a capacitive touch panel, a resistive touch panel, or an infrared touch panel, and may be the same type or different types of touch panels.

However, Embodiment 1 of the present invention is not limited to the example shown in Fig. 1. As another example of Embodiment 1, the forward and backward transparent display units may each comprise an OLED display panel, an LCD display panel, or a projection type display panel (e.g., similar to a vehicle-mounted projection-type head-up display (HUD)), and may be the same type or different types of display panels. As still another example, the forward and backward gesture detection units may both be somatosensory units, similar to optical sensors used in somatosensory techniques such as EyeToy of Sony and Kinect of Microsoft. In this case, the transparent portion of the handheld terminal comprises the forward and backward transparent display units, but does not comprise the forward and backward somatosensory units. That is, the forward and backward gesture detection units may each comprise a capacitive touch panel, a resistive touch panel, an infrared touch panel, or a somatosensory unit, and may be the same type or different types of gesture detection units. When at least one of the forward and backward gesture detection units employs a somatosensory unit, the transparent portion of the handheld terminal does not comprise the at least one gesture detection unit.

In the example of Fig. 1(a), the forward transparent display unit 102 comprises a substrate 106 and a forward OLED light emitting layer 108 disposed on the substrate 106. The forward OLED light emitting layer 108 comprises an anode 110, a hole transport layer 112, an organic light emitting layer 114, an electron transport layer 116, and a cathode 118. The substrate 106 may be made of, for example, transparent glass or plastic. The anode 110 is disposed on the substrate 106, and may be made of, for example, transparent indium tin oxide (ITO). The hole transport layer 112 is disposed on the anode 110, and may be made of, for example, aromatic amine fluorescent compounds. The organic light emitting layer 114 is disposed on the hole transport layer 112, and may be made of, for example, small molecule light emitting materials (such as a dye, a metal complex) or high molecule light emitting materials (such as a conjugated polymer). The electron transport layer 116 is disposed on the organic light emitting layer 114, and may be made of, for example, fluorescent dye compounds. The cathode 118 is disposed on the electron transport layer 116, and may be made of, for example, a composite transparent electrode having a bimolecular layer structure (such as Sr/Ag, Ca/Ag, Ba/Ag, or the like) or a dielectric/metal/dielectric (DMD) structure (such as ITO/Au/ITO, or the like).

The back transparent display unit 102' comprises a substrate 106 and a backward OLED light emitting layer 108' disposed on the substrate 106. That is, in this example, the forward and backward transparent display units 102, 102' share one substrate 106. The backward OLED light emitting layer 108' comprises an anode 110', a hole transport layer 112', an organic light emitting layer 114', an electron transport layer 116', and a cathode 118'. These components may be identical to the components of the forward OLED light emitting layer 108, and may be different from the components of the forward OLED light emitting layer 108 in terms of preparation material, and will not be detailed here again.

The method for manufacturing an assembly of the forward and backward transparent display units 102, 102' comprises the following steps. Firstly, the substrate 106 is prepared. Then, the forward and backward OLED light emitting layers 108, 108' are formed on the front side and the back side of the substrate 106 respectively. The forward and backward OLED light emitting layers 108, 108' may be formed simultaneously, or may also be formed one after another. This step may be implemented by using any existing techniques for forming a transparent OLED light emitting layer. For example, for a small molecule organic light emitting material, a vacuum thermal evaporation process may be employed. For a high molecule organic light emitting material, a spin coating or spray printing process may be employed.

The example of Fig. 1(b) is substantially identical to the example of Fig. 1(a), except that in the example of Fig. 1(b), the forward and backward transparent display units 102, 102' comprise a forward and a backward substrates 106, 106' respectively, wherein the forward and backward substrates 106, 106' are combined together. The both may be bonded together using a transparent adhesive, or any other suitable securing manner (e.g., using a support frame to fix the assembly of the forward and backward transparent display units) may also be used.

In the example of Fig. 1(b), the method for manufacturing an assembly of the forward and backward transparent display units 102, 102' comprises the following steps. Firstly, two substrates 106, 106' are prepared. Then, the forward and backward OLED light emitting layers 108, 108' are formed on the substrates 106, 106' respectively. Then, the faces of the two substrates 106, 106' which are not provided with an OLED light emitting layer are combined together.

### 2. System composition of handheld terminal

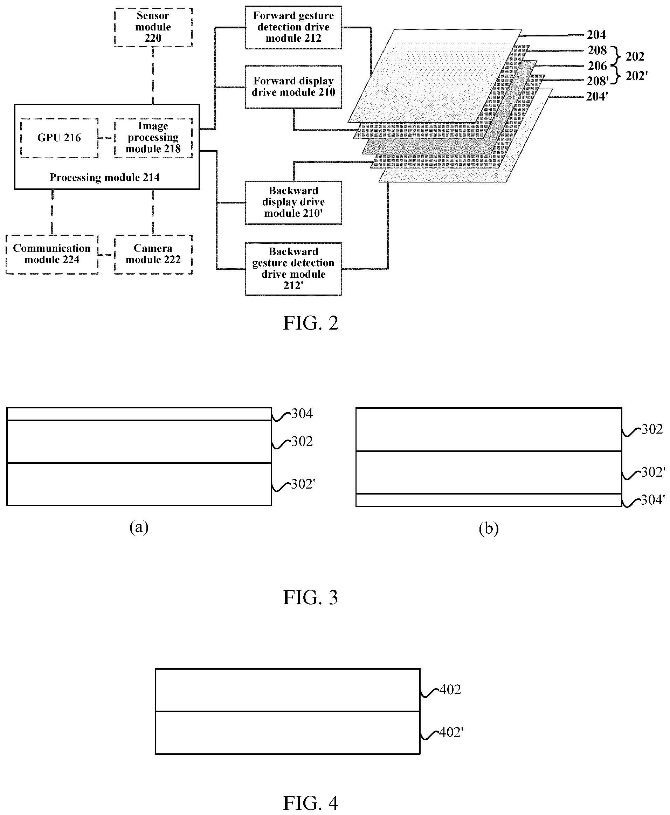

Fig. 2 is a system block diagram showing an example of a handheld terminal according to Embodiment 1 of the present invention. The dotted box represents an optional configuration. As shown, in addition to a forward transparent display unit 202 (which comprises a forward OLED light emitting layer 208 and a shared substrate 206 in this example), a backward transparent display unit 202' (comprising a backward OLED light emitting layer 208' and the shared substrate 206 in this example), a forward gesture detection unit 204 (in this example, a forward touch panel), and a backward gesture detection unit 204' (in this example, a backward touch panel) which have been described above, the handheld terminal may further comprise a forward display drive module 210, a backward display drive module 210', a forward gesture detection drive module 212, a backward gesture detection drive module 212', and a processing module 214.

The forward display drive module 210 may drive the forward transparent display unit 202 to display an image. The image to be displayed may come from the processing module 214. In the example of Fig. 2, the forward display drive module 210 may be implemented by using any existing techniques for driving an OLED display panel to display an image. For example, the forward display drive module 210 may employ an active or passive drive mode. In the case of passive drive mode, the anode layer and the cathode layer of the forward transparent display unit 202 may take the form of a plurality of strips perpendicular to each other, and the intersections of these strips form pixels. At this time, the forward display drive module 210 may be located in the non-transparent portion of the handheld terminal. In the case of active drive mode, the forward display drive module 210 may comprise a transparent thin film transistor (TFT) array disposed between the substrate and the anode layer of the forward transparent display unit 202 to control which pixels will emit light. At this time, the TFT array of the forward display drive module 210 is located in the transparent portion of the handheld terminal, while the other portions may be located in the non-transparent portion. The backward display drive module 210' may drive the backward transparent display unit 202' to display an image, and may be implemented by using a drive mode identical to or different from that of the forward display drive module 210.

However, the invention is not limited to the example described above. As described above, the forward and backward transparent display units may each comprise an OLED display panel, an LCD display panel, or a projection type display panel, and may be the same type or different types of display panels. Accordingly, when at least one of the forward and backward transparent display units is an LCD display panel or a projection type display panel, its corresponding display drive module may be implemented by using any existing techniques for driving an LCD display panel or a projection type display panel to display an image.

The forward gesture detection drive module 212 may drive the forward gesture detection unit 204 to detect a gesture input by a user. In the example of Fig. 2, the forward gesture detection drive module 212 may be implemented by using any existing techniques for driving a touch panel such as a capacitive touch panel, a resistive touch panel, an infrared touch panel, or the like. The backward gesture detection drive module 212' may drive the backward gesture detection unit 204' to detect a gesture input by a user, and may be implemented by using a technique identical to or different from that for the forward gesture detection drive module 212, depending on the type of the touch panel. In addition, the forward and backward gesture detection drive modules 212, 212' may be located in the non-transparent portion of the handheld terminal.

However, the invention is not limited to the example described above. As described above, the forward and backward gesture detection units may each comprise a capacitive touch panel, a resistive touch panel, an infrared touch panel, or a somatosensory unit, and may be the same type or different types of gesture detection units. Accordingly, when at least one of the forward and backward gesture detection units is a somatosensory unit, its corresponding gesture detection drive module may be implemented by using any existing techniques for driving a somatosensory unit. For example, the corresponding gesture detection drive module may be a drive module for an optical sensor used in somatosensory techniques such as EyeToy of Sony and Kinect of Microsoft.

The processing module 214 may be configured to cause an image to be displayed on one of the forward and backward transparent display units 202, 202' such that the image or another image different from the image is displayed on the other of the forward and backward transparent display units 202, 202', and to process a gesture input detected via at least one of the forward and backward gesture detection units 204, 204'. The other functions of the processing module 214 will be further described in the following "Double-side display function", "Double-side manipulation function", "Rotation function" and "Augmented reality function". In addition, the processing module 214 may be located in the non-transparent portion of the handheld terminal.

As an example, the processing module 214 may comprise a graphics processor 216 for generating an image, and an image processing module 218. The graphics processor 216 may employ, for example, a commercially available graphics processor for a handheld terminal. The image processing module 218 may be configured to cause the image generated by the graphics processor 216, to be displayed on one of the forward and backward transparent display unit 202, 202', to cause the image or another image generated by the graphics processor 216 different from the image, to be displayed on the other of the forward and backward transparent display units 202, 202', and to process a gesture input detected via at least one of the forward and backward gesture detection units 204, 204'. The image processing module 218 may be implemented as an application specific integrated circuit (ASIC), a field programmable gate array (FPGA), or the like. In this example, optionally, the processing module 214 may further comprise a central processor for controlling the following mentioned optional modules, e.g., the sensor module, camera module, communication module, or the like.

As another example, the processing module 214 may be a central processor configured to perform the functions of the graphics processor 216 and the image processing module 218. The central processor may employ, for example, a commercially available central processor for a handheld terminal.

As still another example, the processing module 214 may comprise a graphics processor 216 for generating an image, and a central processor. The central processor is configured to perform the functions of the image processing module 218, and may employ, for example, a commercially available central processor for a handheld terminal.

Optionally, the handheld terminal may further comprise a sensor module 220 for sensing information related to a rotation of the handheld terminal relative to a horizontal direction. The sensor module 220 may comprise an N-axis acceleration sensor (N is for example 2, 3, or 6). The acceleration sensor may employ, for example, a commercially available accelerometer chip such as accelerometer chips from Freescale, Invensense, or the like. Optionally, the sensor module 220 may also comprise an N-axis gyroscope (N is for example 3). The gyroscope may employ, for example, a commercially available gyroscope chip such as a gyroscope chip from STMicroelectronics, Freescale, or the like. The use of the sensor module 220 will be further described in the following "Rotation function" section. The sensor module 220 may be located in the non-transparent portion of the handheld terminal.

Optionally, the handheld terminal may also comprise a camera module 222 for viewing and photographing an object, and a communication module 224 for performing wireless communication. The camera module 222 may employ, for example, a commercially available camera module for a handheld terminal. The communication module 224 may employ, for example, a commercially available communication module for a mobile phone. The use of the camera module 222 and the communication module 224 will be further described in the following "Augmented reality function" section. The camera module 222 and the communication module 224 may be located in the non-transparent portion of the handheld terminal.

However, the system composition of Embodiment 1 of the present invention is not limited thereto. Optionally, depending on the requirement, the handheld terminal may also comprise other modules (e.g., audio processing modules, speakers, or the like) which are typically used for mobile phones, tablet PCs, or the like.

### 3. Double-side display function

Optionally, the processing module 214 may be configured to cause an image to be displayed on a corresponding transparent display unit according to one of a front display mode, a back display mode, and a double-side display mode. As described hereinbefore, this function may be performed by the image processing module 218 or the central processor.

In one example, the three display modes may be set by a physical switch installed on the handheld terminal. The user can set a corresponding display mode by moving the physical switch to one of three positions. In another example, these three display modes may be set in a setup menu of the operating system of the handheld terminal. In still another example, both setting modes described above may be present at the same time.

The above functions may be implemented by the processing module 214 (e.g., the image processing module 218 or the central processor) by performing the following process. Firstly, the current image display mode is detected. For example, the current image display mode may be represented by a mode flag stored in a memory of the handheld terminal. Then, an image data to be displayed is transmitted to a corresponding display drive module according to the current image display mode, such that the image is displayed on the corresponding transparent display unit.

Optionally, the double-side display mode may be subdivided into a double-side synchronous display mode and a double-side asynchronous display mode. In the double-side synchronous display mode, different users located respectively on the front side and the back side of the handheld terminal can see the same image displayed by the handheld terminal. In the double-side asynchronous display mode, different users located respectively on the front side and the back side of the handheld terminal can see different images displayed by the handheld terminal. For example, two different users located respectively on the front side and the back side can simultaneously touch the touch panel on the side corresponding thereto, to manipulate different apps installed on the handheld terminal.

In the double-side asynchronous display mode described above, the processing module 214 (e.g., the graphics processor 216 or the central processor) may generate an image for a corresponding transparent display unit, according to gesture inputs detected via different gesture detection units, and add a corresponding flag in the image data of the image to identify the corresponding transparent display unit. Then, the processing module 214 (e.g., the image processing module 218 or the central processor) may transmit the image data of the to-be-displayed image to a corresponding display drive module according to the flag.

### 4. Double-side manipulation function

Optionally, the processing module 214 may be configured to, according to a gesture input detected via at least one of the forward and backward gesture detection units 210, 210', cause an appearance of an object in a to-be-displayed image to change correspondingly. As described hereinbefore, this function may be performed by the image processing module 218 or the central processor.

Similar to the double-side display function, the double-side manipulation function can also be divided into a front manipulation mode, a back manipulation mode and a double-side manipulation mode. A user can set a corresponding manipulation mode by a physical switch, or may also set a corresponding manipulation mode in a setup menu of the operating system of the handheld terminal.

The object in the to-be-displayed image may comprise, but not limited to, an object in an image of a game app, an object in a user interface, or the like. The appearance of the object may comprise, but not limited to, the shape of the object, the concave/convex state, positions of part of constituent elements, or the like. As an example, in a game app, the user can press a balloon displayed on the handheld terminal with different fingers on both sides of the handheld terminal simultaneously, such that a corresponding recess appears at the pressed position of the balloon, and the recess appearing on the back side of the balloon may be shown by using a perspective view, thereby increasing the interactivity between the user and the game app and expanding the use of the handheld terminal in entertainment games. As another example, in a poker game app, the user may use different fingers to swipe a set of displayed playing cards in two opposite directions on both sides of the handheld terminal respectively, such that the set of playing cards are fanned out as in a real environment, thereby enhancing the game's verisimilitude and interestingness. As a further example, in a user interface for adjusting the volume of the handheld terminal, the user can move a pointer of a circular knob displayed on the handheld terminal with different fingers on both sides of the handheld terminal simultaneously, thereby adjusting the volume to a desired magnitude. The portions of the circular knob other than the pointer may be in a transparent state, so as to facilitate the user's manipulation from both sides simultaneously.

The functions described above may be implemented by the processing module 214 (e.g., the image processing module 218 or the central processor) by performing the following process. Firstly, the processing module 214 (e.g., the image processing module 218 or the central processor) may determine which preset input condition in the targeted application is met by the gesture input detected via at least one of the forward and backward gesture detection units 210, 210'. Then, the processing module 214 (e.g., the graphics processor 216 or the central processor) may generate a corresponding image specified in the application according to the determined input condition. For example, the application may prepare a corresponding image material in advance for each preset input condition. When a preset input condition is satisfied, its corresponding image material can be used to generate a corresponding image.

### 5. Rotation function

Optionally, the processing module 214 may be configured to: rotate a to-be-displayed image according to the information which is related to a rotation of the handheld terminal relative to a horizontal direction and is sensed by the sensor module 220, such that the rotated image does not rotate relative to the horizontal direction; or cause a motion state of an object in a to-be-displayed image to change correspondingly according to the information.

### 5.1 Image rotation function

Corresponding to the double-side display function, the image rotation function may implement a front image rotation, a back image rotation, and a double-side image rotation.

The image rotation function may be implemented by the processing module 214 (e.g., the image processing module 218 or the central processor) by performing the following process. Firstly, the rotation angle and the rotation direction may be determined based on the information. When the sensor module 220 comprises an N-axis acceleration sensor (N is for example 2, 3 or 6), the sensed information related to the rotation of the handheld terminal relative to the horizontal direction comprises the accelerations of the handheld terminal in N axes. The processing module 214 (e.g., the image processing module 218 or the central processor) may perform low pass filtering on the acceleration data of the N axes to obtain the components of the gravitational acceleration on the N axes, and calculate the rotation angle of the x-axis or y-axis of the display plane of the handheld terminal relative to the horizontal direction according to these components. For example, the algorithms for determining the rotation angle of the handheld terminal in Android operating system may be employed. Optionally, when the sensor module 220 further comprises an N-axis gyroscope (N is for example 3), the sensed information related to the rotation of the handheld terminal relative to the horizontal direction further comprises angular velocities of the handheld terminal relative to the N axes. The processing module 214 (e.g., the image processing module 218 or the central processor) may more accurately calculate the rotation angle of the x-axis or y-axis of the display plane of the handheld terminal relative to the horizontal direction, by any existing accelerometer/gyroscope fusion algorithm (e.g., the relevant algorithms in Android or iOS operating system). The step of determining the rotation angle may be periodically performed at a certain time interval. The processing module 214 (e.g., the image processing module 218 or the central processor) may determine the rotation direction by determining a change in the rotation angle between adjacent time intervals. However, the present invention is not limited thereto. The rotation direction may also be determined by using any existing algorithms for determining the rotation direction of the handheld terminal (e.g., the relevant algorithms in Android or iOS operating system).

Then, the processing module 214 (e.g., the image processing module 218 or the central processor) may rotate the to-be-displayed image according to the rotation angle and the rotation direction, such that the rotated image does not rotate relative to the horizontal direction. The to-be-displayed image comprises, but not limited to, a desktop of a handheld terminal, an interface of a web browser, an interface of a text browser, an interface of a media player, or the like. For example, the processing module 214 (e.g., the image processing module 218 or the central processor) may rotate the to-be-displayed image by an angle that is opposite to the rotation angle. This step may be implemented by using any existing image rotation algorithms. Likewise, this step may be performed periodically at a certain time interval. In this way, no matter how the handheld terminal rotates, the to-be-displayed image can be kept in real time in such a state without rotation relative to the horizontal direction, thereby facilitating the user's viewing.

### 5.2 Rotation manipulation function

The rotation manipulation function may be implemented by the processing module 214 (e.g., the image processing module 218 or the central processor) by performing the following process. Firstly, the rotation angle and/or rotation direction may be determined based on the information. The rotation angle and/or rotation direction may be determined as described in section 5.1, and will not be detailed here again.

Then, the motion state of the object in the to-be-displayed image may be changed correspondingly according to the rotation angle and/or rotation direction. The object may comprise, but not limited to, an object in an image of a game application, an object in a user interface, or the like. The change in the motion state may comprise, but not limited to, a change from static state to moving state, a change in the moving direction/velocity, or the like. As an example, in a game app, the rolling direction/velocity of an object (e.g., a water drop, a ball) in a game image may be changed by rotating the handheld terminal.

For example, the processing module 214 (e.g., the image processing module 218 or the central processor) may determine which preset input condition in the targeted application is met by the rotation angle and/or rotation direction, and then generate a corresponding image specified in the application according to the determined input condition. For example, the application may prepare a corresponding image material in advance for each preset input condition. When a preset input condition is satisfied, its corresponding image material may be used to generate a corresponding image, such that the motion state of the object in the displayed image is changed.

### 6. Augmented reality function

Optionally, the camera module 220 may be configured to, under the control of the processing module 214 (e.g., the central processor), take an image of a front object when the handheld terminal is facing the object. The communication module 224 may be configured to, under the control of the processing module 214 (e.g., the central processor), transmit data which is related to the image of the object taken by the camera module 224, to a server having an augmented reality function, and to receive related information of the object from the server. The processing module 214 (e.g., the center processor) may be configured to cause the related information to be displayed on a corresponding transparent display unit.

As an example, the user may turn on the augmented reality mode by a physical switch installed on the handheld terminal, or may also turn on the augmented reality mode through a setting menu of the operating system of the handheld terminal. The processing module 214 (e.g., the central processor) may determine whether the augmented reality mode is currently turned on by detecting an augmented reality flag stored in a memory of the handheld terminal. When in the augmented reality mode, the processing module 214 (e.g., the central processor) may control the camera module 220 to track a target object by using a view finder of the camera module 220, and to take an image of the object. The image taken may be stored, for example, in a memory of the handheld terminal.

Then, the processing module 214 (e.g., the central processor) may control the communication module 224 to transmit data related to the image of the object to a server with augmented reality function, and to receive related information of the object from the server. The data related to the image of the object may be, for example, raw data of the image, or may also be data compressed or preprocessed by the processing module 214 (e.g., the central processor). For example, the data may be obtained by performing a feature extraction algorithm. The server with augmented reality function may be implemented by using any existing augmented reality technologies. For example, the server may be a database server on cloud side which may match the received image related data of the object with the data in the database, to obtain the related information of the object.

Then, the processing module 214 (e.g., the central processor) may cause the related information to be displayed on a corresponding transparent display unit. In this way, the transparent portion of the handheld terminal can be directly used as a view finder to observe the front object, and the related information of the object can be directly superimposed on the corresponding transparent display unit, such that the handheld terminal has a novel augmented reality function.

In summary, the handheld terminal according to Embodiment 1 of the present invention has a novel double-side display function, a novel double-side manipulation function, a novel rotation function and a novel augmented reality function due to its novel construction, thereby greatly improving the usability of the handheld terminal.

### Embodiment 2

### 1. Structure of transparent portion

Fig. 3 is a schematic structure diagram showing an example of a transparent portion of the handheld terminal according to Embodiment 2 of the present invention. The handheld terminal shown in Fig. 3 is substantially the same as that of Embodiment 1, except that the handheld terminal of Fig. 3 is provided with a gesture detection unit only on one side. Specifically, in Fig. 3(a), only a forward gesture detection unit 304 is provided, while in Fig. 3(b), only a backward gesture detection unit 304' is provided.

### 2. System composition of handheld terminal

Accordingly, the system composition of the handheld terminal according to Embodiment 2 of the present invention is substantially the same as that of the handheld terminal of Embodiment 1, except that the handheld terminal of Embodiment 2 is provided with only one gesture detection drive module. Specifically, in the case of Fig. 3(a), only a forward gesture detection drive module is provided, while in Fig. 3(b), only a backward gesture detection drive module is provided.

### 3. Double-side display function

Accordingly, the double-side display function of the handheld terminal according to Embodiment 2 of the present invention is substantially the same as that of the handheld terminal of Embodiment 1, except that in the double-side asynchronous display mode of the handheld terminal of Embodiment 2, the user located on one side may manipulate the handheld terminal with fingers such that different users located on both sides can see different images, but two different users located respectively on the front side and the back side cannot touch the touch panel on the corresponding side simultaneously to manipulate different apps installed on the handheld terminal.

### 4. Manipulation function

Since the handheld terminal according to Embodiment 2 of the present invention is provided with a gesture detection unit only on one side, it has only the one-side manipulation function and does not have the double-side manipulation function of the handheld terminal of Embodiment 1.

### 5. Rotation function and augmented reality function

The handheld terminal of Embodiment 2 of the present invention may have the same rotation function and augmented reality function as those of the handheld terminal of Embodiment 1.

### Embodiment 3

### 1. Structure of transparent portion

Fig. 4 is a schematic structure diagram showing an example of a transparent portion of a handheld terminal according to Embodiment 3 of the present invention. The handheld terminal shown in Fig. 4 is substantially the same as that of Embodiment 1, except that the handheld terminal of Fig. 4 does not have a gesture detection unit.

### 2. System composition of handheld terminal

Accordingly, the system composition of the handheld terminal according to Embodiment 3 of the present invention is substantially the same as that of the handheld terminal of Embodiment 1, except that the handheld terminal of Embodiment 3 does not have a gesture detection drive module.

### 3. Double-side display function

Accordingly, the double-side display function of the handheld terminal according to Embodiment 3 of the present invention is substantially the same as that of the handheld terminal of Embodiment 1, except that in the double-side asynchronous display mode of the handheld terminal of Embodiment 3, two different users located respectively on the front side and the back sides of the handheld terminal cannot touch the touch panel on the corresponding side simultaneously to manipulate different apps installed on the handheld terminal. Optionally, a user located on one side may manipulate the handheld terminal by using, for example, a physical keyboard or button or the like, so as to enable different users located on both sides to see different images.

### 4. Manipulation function

Since the handheld terminal according to Embodiment 3 of the present invention does not have a gesture detection unit, it does not have the double-side manipulation function of the handheld terminal of Embodiment 1.

### 5. Rotation function and augmented reality function

The handheld terminal of Embodiment 3 of the present invention may have the same rotation function and augmented reality function as the handheld terminal of Embodiment 1.

### Embodiment 4

### 1. Structure of transparent portion

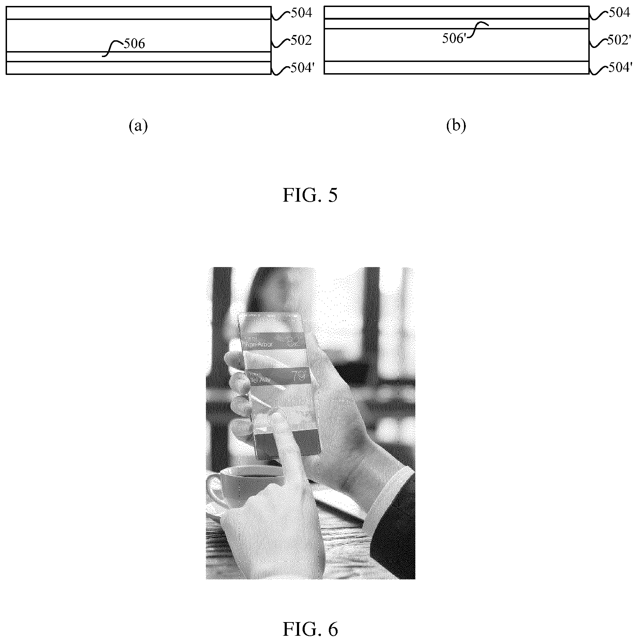

Fig. 5 is a schematic structure diagram showing an example of a transparent portion of a handheld terminal according to Embodiment 4 of the present invention. The handheld terminal shown in Fig. 5 is substantially the same as that of Embodiment 1, except that the handheld terminal of Fig. 5 is provided with a transparent display unit only on one side. Specifically, in Fig. 5(a), only a forward transparent display unit 502 is provided, while in Fig. 5(b), only a backward transparent display unit 502' is provided.

### 2. System composition of handheld terminal

Accordingly, the system composition of the handheld terminal according to Embodiment 4 of the present invention is substantially the same as that of the handheld terminal of Embodiment 1, except that the handheld terminal of Embodiment 4 is provided with only one display drive module. Specifically, in the case of Fig. 5(a), only a forward display drive module is provided, while in Fig. 5(b), only a backward display drive module is provided.

### 3. Display function

Accordingly, since the handheld terminal according to Embodiment 4 of the present invention is provided with only one transparent display unit, it does not have the double-side display function of Embodiment 1, and has only the one-side display function.

### 4. Double-side manipulation function, rotation function and augmented reality function

The handheld terminal of Embodiment 4 of the present invention may have the same double-side manipulation function, rotation function and augmented reality function as those of the handheld terminal of Embodiment 1.

The present invention has been described above by means of four embodiments. Fig. 6 is a diagram showing a practical application scenario of a handheld terminal according to an embodiment of the present invention. As can be seen from the figure, the user can see the opposite side through the handheld terminal, and can manipulate the handheld terminal through the touch panel.

It should be noted that the embodiments described above are merely exemplary embodiments of the present invention, but are not used to limit the protection scope of the present invention. The protection scope of the present invention should be defined by the appended claims.

## Claims

1. A handheld terminal which enables a user to see the opposite side through a portion of the handheld terminal, comprising:
a first transparent display unit disposed on one of a front side and a back side of the handheld terminal;
a second transparent display unit disposed on the other of the front side and the back side, or a first and a second gesture detection units disposed on the front side and the back side respectively;
a drive module comprising a first display drive module for the first transparent display unit, and one of the following two constituent parts:
a second display drive module for the second transparent display unit, or
a first and a second gesture detection drive modules for the first and second gesture detection units respectively; and
a processing module configured to cause an image to be displayed on the first transparent display unit, and to perform one of the two operations of:
causing the image or another image different from the image to be displayed on the second transparent display unit, or
processing a gesture input detected via at least one of the first and second gesture detection units.

2. The handheld terminal according to claim 1, wherein the handheld terminal comprises the second transparent display unit and the first and second gesture detection units, the drive module further comprises the other of the two constituent parts, and the processing module is further configured to perform the other of the two operations.

3. The handheld terminal according to claim 1 or 2, wherein the first and second transparent display units comprise a first and a second OLED light emitting layers respectively; and
wherein the first and second transparent display units share one substrate, or comprise a first and a second substrates respectively, the first and second substrates being combined together.

4. The handheld terminal according to claim 1 or 2, wherein the first and second transparent display units each comprise an OLED display panel, an LCD display panel, or a projection type display panel.

5. The handheld terminal according to any one of claims 1 to 4, wherein the first and second gesture detection units each comprise a capacitive touch panel, a resistive touch panel, an infrared touch panel, or a somatosensory unit.

6. The handheld terminal according to any one of claims 1 to 5, wherein the processing module is further configured to cause an image to be displayed on a corresponding transparent display unit according to one of a front display mode, a back display mode, and a double-side display mode.

7. The handheld terminal according to any one of claims 1 to 6, wherein the processing module is further configured to, according to a gesture input detected via at least one of the first and second gesture detection units, cause an appearance of an object in a to-be-displayed image to change correspondingly.

8. The handheld terminal according to any one of claims 1 to 7, further comprising a sensor module for sensing information related to a rotation of the handheld terminal relative to a horizontal direction;
wherein the processing module is further configured to:
rotate a to-be-displayed image according to the information such that the rotated image does not rotate relative to the horizontal direction, or
cause a motion state of an object in a to-be-displayed image to change correspondingly according to the information.

9. The handheld terminal according to claim 8, wherein the sensor module comprises an acceleration sensor, or comprises an acceleration sensor and a gyroscope.

10. The handheld terminal according to any one of claims 1 to 9, further comprising a camera module for viewing and photographing an object, and a communication module for performing wireless communication;
wherein the camera module is configured to, under a control of the processing module, take an image of a front object when the handheld terminal is facing the object;
wherein the communication module is configured to, under a control of the processing module, transmit data which is related to the image of the object taken by the camera module, to a server having an augmented reality function, and to receive related information of the object from the server; and
wherein the processing module is configured to cause the related information to be displayed on a corresponding transparent display unit.

11. The handheld terminal according to claim 6, wherein the processing module comprises:
a graphics processor for generating the image; and
an image processing module configured to cause the image to be displayed on the corresponding transparent display unit, according to one of the front display mode, the back display mode, and the double-side display mode.

12. The handheld terminal according to claim 7, wherein the processing module comprises:
a graphics processor for generating the image; and
an image processing module configured to, according to the gesture input detected via at least one of the first and second gesture detection units, cause the appearance of the object in the to-be-displayed image to change correspondingly.

13. The handheld terminal according to claim 8, wherein the processing module comprises:
a graphics processor for generating the image; and
an image processing module configured to:
rotate the to-be-displayed image according to the information such that the rotated image does not rotate relative to the horizontal direction, or
cause the motion state of the object in the to-be-displayed image to change correspondingly according to the information.

14. The handheld terminal according to claim 10, wherein the processing module comprises a central processor configured to control the camera module and the communication module, and to cause the related information to be displayed on the corresponding transparent display unit.
